(19) Europäisches Patentamt
European Patent Office
Office européen des brevets

(11) EP 0 635 701 B1

(12) **EUROPÄISCHE PATENTSCHRIFT**

(45) Veröffentlichungstag und Bekanntmachung des Hinweises auf die Patenterteilung:
**29.10.1997 Patentblatt 1997/44**

(51) Int Cl.⁶: **G01D 5/34**

(21) Anmeldenummer: 93111500.0

(22) Anmeldetag: **17.07.1993**

(54) **Längen- oder Winkelmesseinrichtung**

Length or angle measuring device

Dispositif de mesure de longeurs ou d'angles

(84) Benannte Vertragsstaaten:
**AT DE FR GB IT**

(72) Erfinder:
- **Meyer, Hermann, Dipl.-Ing. (FH)
  D-83458 Weissbach (DE)**
- **Brandl, Sebastian, Dipl.-Ing. (FH)
  D-83352 Altenmarkt (DE)**

(43) Veröffentlichungstag der Anmeldung:
**25.01.1995 Patentblatt 1995/04**

(73) Patentinhaber: **Dr. Johannes Heidenhain GmbH
D-83292 Traunreut (DE)**

(56) Entgegenhaltungen:
EP-A- 0 418 211          DE-A- 2 510 273
GB-A- 2 246 431

**Beschreibung**

Die Erfindung bezieht sich auf eine Längen- oder Winkelmeßeinrichtung gemäß dem Oberbegriff des Anspruches 1.

Aus der DE 29 00 295 C2 ist ein Winkelmeßgerät bekannt, bei dem auf der beleuchtungsfernen Teilscheibe die lichtdurchlässigen Bereiche größer sind als auf der beleuchtungsseitigen Teilscheibe. Damit soll erreicht werden, daß eine möglichst große Lichtenergiemenge auf die Fotoempfänger trifft.

Es hat sich gezeigt, daß bei derartigen Einrichtungen die von Detektoren empfangene Lichtmenge abhängig vom Abstand der einzelnen Teilscheiben und vom Abstand der Lichtquelle ist. Ferner sind bei divergierender oder konvergierender Beleuchtung die Phasenbeziehungen undefiniert. Eine Verringerung des Abtastabstandes führt zu einer Erhöhung der Lichtenergie, also auch zu höheren Signalamplituden am Ausgang der Detektoren. Dies führt zum Übersteuern der nachgeschalteten elektronischen Auswerteinheit und sollte vermieden werden.

In der DE-A-25 10 273 wird zur Lösung der angesprochenen Problematik nunmehr vorgeschlagen, die photoelektrischen Detektorelemente derart im Strahlengang der Lichtquelle anzuordnen, daß je nach Abstand von Maßstab und Abtastplatte eine unterschiedliche Abschattung bzw. Vignettierung der photoempfindlichen Flächen resultiert. Insbesondere ergibt sich mit kleiner werdendem Abstand zwischen Abtastplatte und Maßstab eine zunehmende Abschattung der lichtempfindlichen Detektorflächen. Zur konkreten Realisierung einer derartigen abstandsabhängigen Abschattung der lichtempfindlichen Flächen der Photoelement finden sich in dieser Druckschrift keine weitergehenden Hinweise.

Aus der GB-A-2 246 431 ist zur Lösung der oben angesprochenen Problematik bekannt, eine Abtastplatte definiert verkippt im Strahlengang anzuordnen. Es ergeben sich demzufolge bestimmte konstruktive Voraussetzungen für den Einbau der Abtastplatte, die mitunter nicht in allen Längen- oder Winkelmeßeinrichtungen eingehalten werden können.

Aus der EP-A-0 418 211 ist desweiteren bekannt, die erwünschte Abstandsunabhängigkeit der Signalamplitude über eine aufwendige Anordnung mit definiert abgetragenen Reflektorflächen sicherzustellen.

Der vorliegenden Erfindung liegt die Aufgabe zugrunde, die vorgenannten Nachteile zu vermeiden und eine Längen- oder Winkelmeßeinrichtung zu schaffen, bei der eine durch Verringerung des Abtastabstandes hervorgerufene Erhöhung der Signalamplitude kompensiert wird, und bei der die Phasenbeziehungen der verschiedenen Abtastsignale konstant bleiben.

Diese Aufgabe wird gelöst durch eine Längen- oder Winkelmeßeinrichtung mit den Merkmalen des Anspruchs 1.

Die besonderen Vorteile der Erfindung liegen darin, daß eine Signalamplituden-Kompensation stattfindet, daß keine Phasenkorrektur vorgenommen werden muß, und daß auch unterschiedliche Teilungsperioden und/oder Teilungsausgestaltungen in einem Abtastkopf vorhanden sein können, ohne daß die Kompensation leidet. Ein weiterer Vorteil liegt noch darin, daß bei der Signalamplituden-Kompensation keine Kontraständerung eintritt.

Zweckdienliche Ausbildungen sind Gegenstand der abhängigen Ansprüche.

Mit Hilfe der Zeichnungen soll anhand von Ausführungsbeispielen die Erfindung näher erläutert werden.

Es zeigt

Figur 1    eine Prinzipdarstellung der Erfindung anhand eines Ausschnittes einer Lagemeßeinrichtung;

Figur 2    eine Prinzipdarstellung des Standes der Technik;

Figuren 3A, 3B, 3C  eine Meßeinrichtung in drei Teilansichten;

Figuren 4A, 4B, 4C  eine Variante einer Meßeinrichtung in drei Teilansichten und

Figuren 5A, 5B, 5C  eine weitere Variante in drei Teilansichten.

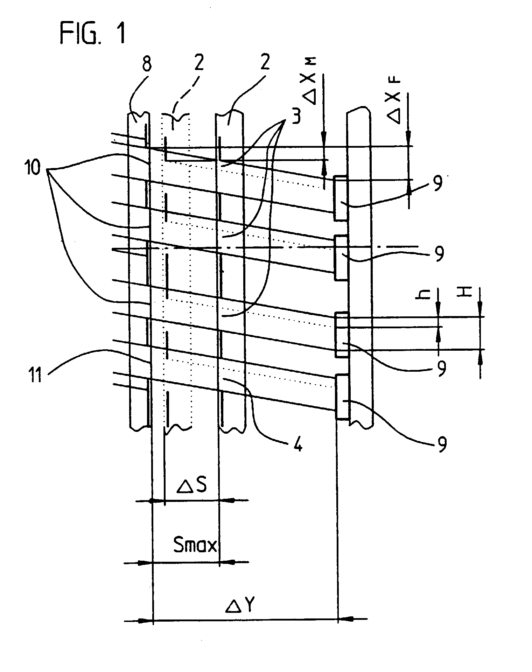

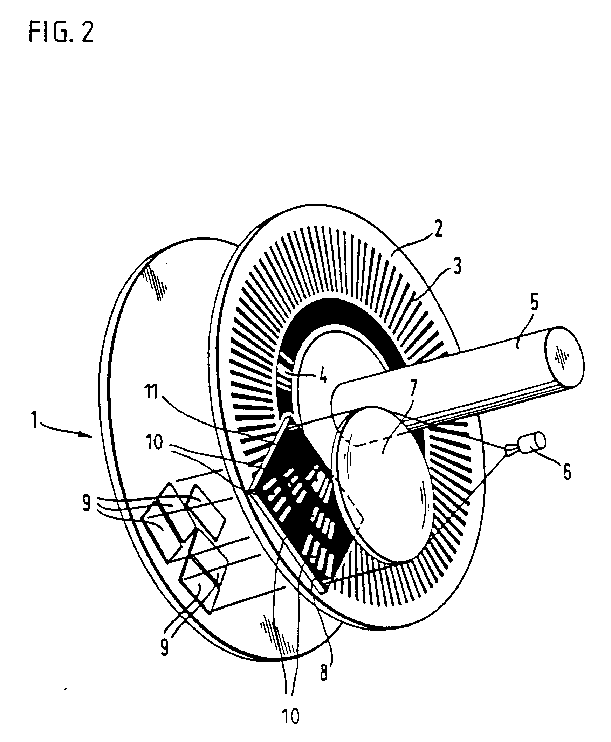

Aus Figur 1 ist die Erfindung ersichtlich, wobei die Beschreibung im Anschluß an die Beschreibung der Figur 2 erfolgt, die den Stand der Technik in Form einer Winkelmeßeinrichtung zeigt. Derartige Winkelmeßeinrichtungen - auch als inkrementale Drehgeber bezeichnet - arbeiten nach dem Prinzip der photoelektrischen Abtastung feiner Gitter.

Inkrementale Drehgeber 1 besitzen als Maßverkörperung eine Teilscheibe 2 aus Glas mit einem Radialgitter 3 aus Strichen und Lücken. Die lichtundurchlässigen Striche, die etwa so breit sind wie die lichtdurchlässigen Lücken, bestehen aus Chrom, das auf den Glaskörper 2 aufgedampft wird. Auf einer zweiten Spur befindet sich zusätzlich eine Referenzmarke 4.

In geringem Abstand gegenüber der drehbaren, auf einer Welle 5 befestigten Teilscheibe 2 ist eine Abtasteinheit 8 angeordnet, die auf vier Feldern 10 jeweils die gleiche Gitterteilung 3 wie die Teilscheibe 2 und ein Abtastfeld 11 für die Referenzmarke 4 trägt. Die vier Strichgitter der Abtastplatte 8 sind jeweils um ein Viertel der Teilungsperiode - d. h. ein Viertel des Abstandes zwischen zwei Strichen - zueinander versetzt.

Alle Felder werden von einem parallel ausgerichteten Lichtbündel durchstrahlt, das von einer LED 6 oder einer

EP 0 635 701 B1

Miniaturlampe mit Kondensor 7 ausgeht. Bei einer Drehung der Teilscheibe 2 wird der Lichtstrom moduliert und seine Intensität von Silizium-Photoelementen 9 erfaßt. Die Photoelemente 9 sind so geschaltet, daß sie zwei elektrisch annähernd sinusförmige Signale und eine von der Referenzmarke 4 abgeleitete Signalspitze - nämlich das Referenzmarkensignal liefern.

Anhand eines schematisch dargestellten Ausschnittes soll nun die Erfindung mit Hilfe der Figur 1 erläutert werden. Von einer nichtdargestellten Lichtquelle wird kollimiertes Licht schräg zu den Teilungsebenen des Maßstab- 3, 4 und des Abtastgitters 10, 11 auf Detektoren 9 geleitet.

Die Teilungsebenen sind die Ebenen, in denen sich die Teilungsstriche des Maßstabgitters 3, 4 und des Abtastgitters 10, 11 befinden. Die Teilungsstriche verlaufen parallel zur Zeichnungsebene von oben nach unten. Wesentlich ist dabei, daß außer dem Merkmal des schräg auf die Teilungsebenen des Maßstabgitters 3, 4 und des Abtastgitters 10, 11 auftreffendes Lichtes dieses Licht parallel zur Ausrichtung der Gitterstriche verläuft. Dadurch ist gewährleistet, daß die Phasenverhältnisse konstant bleiben. Zudem ist von Bedeutung, daß die Länge der Gitterteilungsstriche sowohl der Gitter des Maßstabes als auch der der Abtasteinheit begrenzt wird.

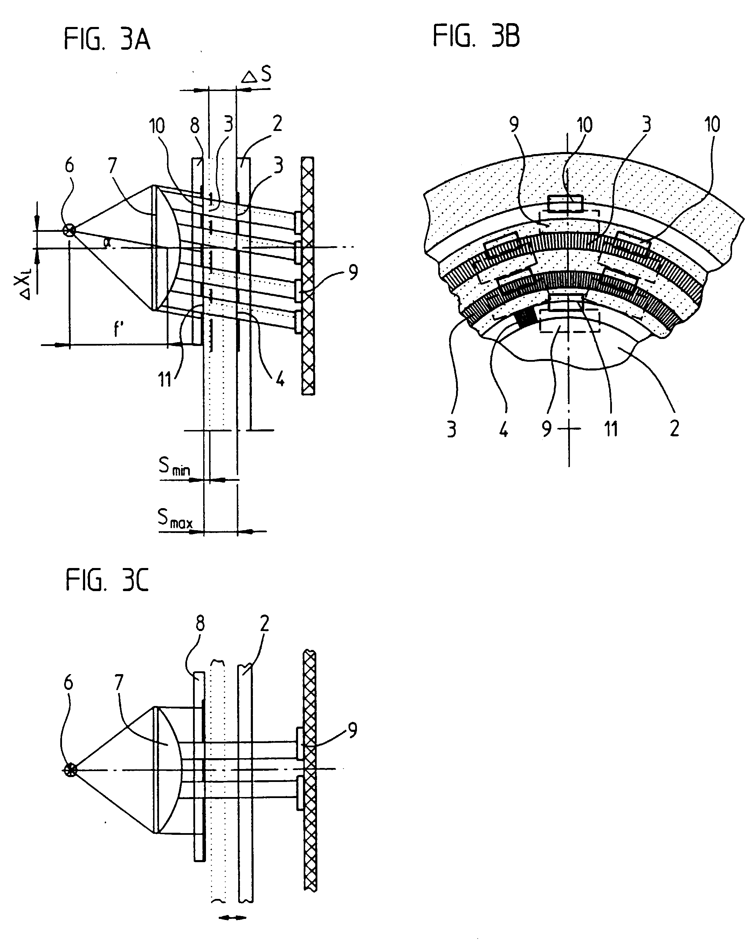

Dies wird deutlich, wenn die Figuren 3 bis 5 betrachtet werden. Aus Figur 3A ist ersichtlich, daß sich die Gitterstriche über Teilbereiche der Teilungsebene erstrecken. Deutlicher wird dies in der Teilansicht gemäß Figur 3B. Dort werden die Teilungsspuren 3 durch Spuren radial begrenzt, die keine Teilung tragen und wie eine Maske wirken. Diese Bereiche sind punktiert dargestellt. Figur 3C zeigt lediglich eine weitere Ansicht, aber die Figuren 3A und 3B zeigen die Erfindung deutlicher.

In Figur 3A ist die Teilscheibe 2 in zwei verschiedenen Stellungen dargestellt, die sich um den Abstand $\Delta S$ unterscheiden. Mit durchgezogenen Linien ist die Stellung mit dem maximalen Abtastabstand Smax von dem Abtastgitter 8 gezeigt und mit punktierten Konturen der minimale Abtastabstand Smin. Beim maximalen Abtastabstand Smax werden die Detektoren 9 maximal ausgeleuchtet. Beim minimalen Abtastabstand Smin wird ein Teil der Beleuchtungsstrahlen durch die vorerwähnten Masken abgeschattet, so daß die Detektoren 9 weniger Licht empfangen, womit die höhere Intensität, die durch die Annäherung an die Beleuchtung 6, 7 auftritt, kompensiert wird.

Der optische Aufbau ist dabei folgender: Figur 3A zeigt die Beleuchtungsanordnung 6, 7, bei der die Lichtquelle (LED od. Lampe) 6 in der Brennebene, in Strichrichtung um $\Delta X_L$ verschoben zur optischen Achse angeordnet ist. Dadurch ergibt sich ein paralleler Strahlengang der zur optischen Achse, in Strichrichtung um den Winkel

$$\alpha = \arctan \frac{\Delta X_L}{f'}$$

geneigt ist.

Die Abtastfelder 10, 11 können je nach Bedarf nebeneinander, untereinander oder kreuzweise angeordnet werden, wobei die Abtastfelder 10, 11 im Verhältnis 1:1 oder nach ArcSin geteilt sein können. D.h. die Gitterstriche können genauso breit sein, wie die Lücken oder nach einer bestimmten Funktion ausgebildet sein.

Die Strichlängen auf der Maßstabsteilung entsprechen der Strichlänge der Abtastfelder und sind um den Betrag

$$\Delta X_M = \frac{\Delta X_L}{f'} * Smax$$

zur Strichplatte versetzt.

Die Striche 3 der Maßverkörperung 2 sind durch lichtundurchlässige Stege getrennt, die die bereits beschriebenen Masken bilden.

Die Detektoren 9 sind ebenfalls ums den Betrag

$$\Delta X_F = \frac{\Delta X_L}{f'} * \Delta Y$$

in gleicher Richtung versetzt angeordnet.

Bei der beschriebenen Anordnung ergibt sich bei dem Abstand Smax die maximale Beleuchtung der Detektoren 9.

Bei Abstandsverminderung wird nun der Vergrößerung des Abtastsignales durch Abschattung des Lichtstromes entgegengewirkt.

Kennt man die, für jede Teilungsperiode bei herkömmlicher Beleuchtung zu ermittelnde Signaländerung in Abhängigkeit vom Arbeitsabstand, d.h., die maximale Intensität Imax bei minimalem Abstand Smin und die minimale Intensität Imin bei maximalem Abstand Smax, so läßt sich die Ablage der Lichtquelle $\Delta X_L$ bei gegebenen geometrischen und optischen Daten wie folgt ermitteln:

$$\frac{Imax}{Imin} = \frac{H}{H - h} \; ; h = \frac{\Delta X_L}{f'} \; * \; \Delta S$$

Durch Einsetzen und Umformen ergibt sich:

$$X_L = \frac{H*f'}{\Delta S} \; * \; (1- \frac{Imin}{Imax})$$

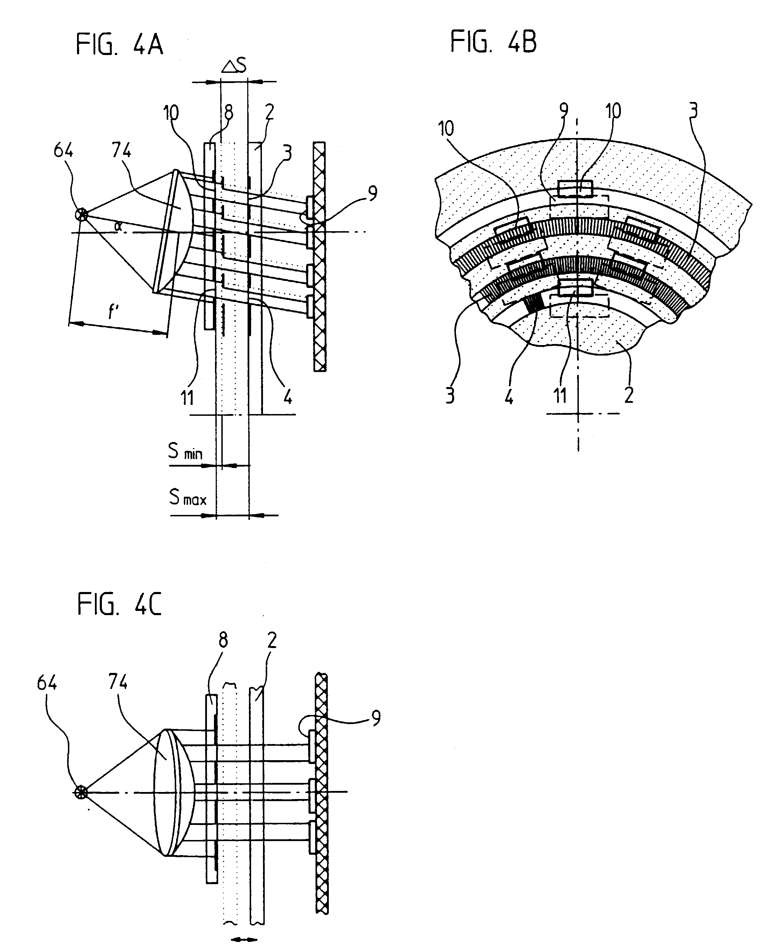

Ebenso ist es denkbar, eine schräge Beleuchtung durch Schrägstellung der gesamten Beleuchtungseinheit - Lampe 6 und Kondensor 7 - zu erzeugen, was in Figur 4A und 4C dargestellt ist.

Da dort im übrigen die gleichen Verhältnisse vorliegen, wie bei der Ausführungsform gemäß Figur 3A bis 3C wurden dieselben Bezugszeichen auch für die Figur 4A bis 4C eingesetzt.

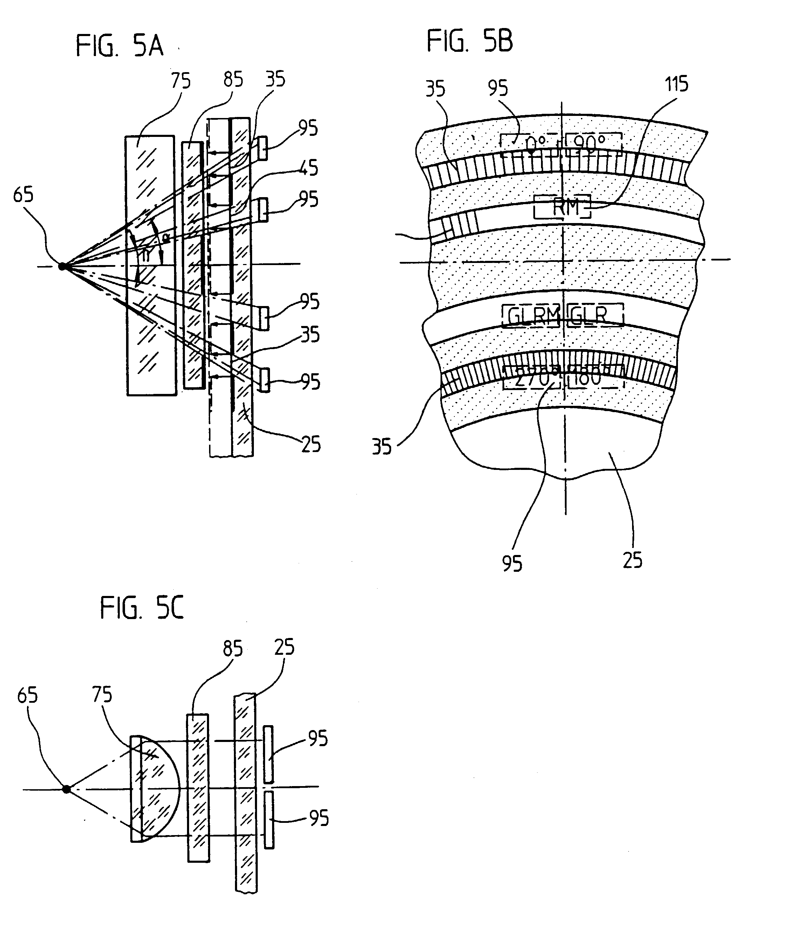

Abweichend von den vorstehenden Ausführungsbeispielen, die mit kollimiertem, schräg auf die Teilungsebenen fallendem Licht arbeiten, zeigt das Ausführungsbeispiel gemäß Figur 5A bis 5C eine Lösung, die mit divergierendem Licht - aber nur in einer Ebene - arbeitet. In Strichrichtung, also in Richtung des Verlaufes der Gitterstriche ist der Beleuchtungsstrahlengang parallel ausgerichtet.

Der optische Aufbau ist aus Figur 5A bis 5B ersichtlich.

Eine Zylinderlinse 75 erzeugt von einer Lichtquelle 65, die sich im Brennpunkt befindet, nur in einer Ebene ein paralleles Strahlenbündel, während in der anderen Ebene die Fotoelemente 95 durch Strahlenbündel, die einen bestimmten Winkel zur optischen Achse haben, ausgeleuchtet werden. Diese Teilstrahlenbündel werden durch Masken auf der Teilscheibe 25 so begrenzt, daß bei größtem Abstand die Fotoelemente 95 maximal ausgeleuchtet werden.

Verringert nun die Teilscheibe 25 den Abstand zum Abtastgitter 85, so werden von den Teilstrahlenbündeln entsprechende Flächen durch die auf der Teilscheibe 25 befindlichen Masken abgeblendet, so daß eine Amplitudenvergrößerung kompensiert wird.

Unterschiedliche Gitterkonstanten erfordern entsprechende Abblendungen. Ein Maß für die Abblendung in Abhängigkeit von der Abstandsänderung ist der Winkel ($\alpha$, $\beta$) den die Strahlenbündel zur optischen Achse bilden. Dadurch ist es möglich, bei einem Abtastkopf unterschiedliche Gitterkonstanten zu kompensieren (Referenzmarke!).

**Patentansprüche**

1. Längen- oder Winkelmeßeinrichtung (1) mit mehreren in Meßrichtung relativ zueinander verschiebbaren Gittern (3, 10; 4, 11), die als Abtast-(8) und als Maßstabsgitter (2) ausgebildet sind und die von einer Lichtquelle (6, 65) kommendes, parallel zum Strichverlauf der Gitterstriche (3, 10; 4, 11) und schräg zu den Teilungsebenen der Gitter (2, 8) verlaufendes Licht modulieren, wobei die entstehenden Intensitätsmodulationen des Lichts durch wenigstens einen nachgeordneten Detektor (9, 95) in zueinander phasenverschobene elektrische Signale umgewandelt werden und eine vom Abstand zwischen den Gittern (2, 8) abhängige Ausleuchtung des wenigstens einen Detektors (9, 95) erfolgt,
dadurch gekennzeichnet, daß
die Strichlängen der Gitterstriche (3, 10; 4, 11) des Abtast- (8) und Maßstabsgitters (2) derart dimensioniert sind, daß die in Längsrichtung benachbart zu den Gitterstrichen (3, 10; 4, 11) angeordneten Bereiche als lichtundurchlässige, maskenartige Begrenzungen für die durchtretenden Lichtbündel wirken, so daß beim maximal zulässigen Abstand (Smax) der Teilungsebenen der Gitter (2, 8) zueinander der wenigstens eine Detektor (9, 95) maximal ausgeleuchtet ist, während beim minimalen Abstand (Smin) ein Teil der durchtretenden Lichtbündel durch die maskenartigen Begrenzungen abgeschattet wird, so daß der Detektor (9, 95) weniger Licht empfängt und derart die höhere Intensität aufgrund der Annäherung an die Beleuchtung kompensiert wird.

2. Längen- oder Winkelmeßeinrichtung nach Anspruch 1, dadurch gekennzeichnet, daß das schräg zu den Teilungsebenen und parallel zu den Gitterstrichen (3, 10; 4, 11) verlaufende Licht mittels einer Zylinderlinse (75) ausgerichtet wird, die im Brennpunkt einer Lichtquelle (65) angeordnet ist.

3. Längen- oder Winkelmeßeinrichtung nach Anspruch 1, dadurch gekennzeichnet, daß die Lichtquelle (6) in der Brennebene eines Kondensors (7) in Strichrichtung zur optischen Achse derart verschoben ist, daß sich ein paralleler Strahlengang ergibt, der in Strichrichtung zur optischen Achse um einen Winkel ($\alpha$) geneigt ist.

**4.** Längen- oder Winkelmeßeinrichtung nach Anspruch 1, dadurch gekennzeichnet, daß eine Beleuchtungseinheit bestehend aus Lichtquelle (6) und Kondensor (7) gegenüber der optischen Achse derart geneigt angeordnet ist, daß sich ein paralleler Strahlengang ergibt, der in Strichrichtung zur optischen Achse um einen Winkel ($\alpha$) geneigt ist.

**5.** Längen- oder Winkelmeßeinrichtung nach Anspruch 1, dadurch gekennzeichnet, daß die Einrichtung nach dem Durchlicht-Prinzip arbeitet.

**Claims**

**1.** Length or angle measuring device (1) with a plurality of grids (3, 10; 4, 11) displaceable relative to one another in the measuring direction, and which are formed as scanning (8) and as scale grids (2), and which modulate the light coming from a light source (6, 65) extending parallel to the configuration of the markings of the grid markings (3, 10; 4, 11) and obliquely to the division planes of the grids (2, 8), the resultant modulations in intensity of the light being converted by at least one subsequent detector (9, 95) into electrical signals offset in phase to one another, and causing illumination of the at least one detector (9, 95) dependent on the spacing between the grids (2, 8),
characterised in that
the marking lengths of the grid markings (3, 10; 4, 11) of the scanning (8) and scale grid (2) are of such dimensions that the areas located in the longitudinal direction adjacent to the grid markings (3, 10; 4, 11) act as light-impermeable, mask-like barriers for the beams of light passing through, so that at the maximum accessible spacing (Smax) of the division planes of the grids (2, 8) to one another, the at least one detector (9, 95) is illuminated to the maximum, while at the minimum spacing (Smin) a portion of the beams of light passing through is shaded by the mask-like limitations, so that the detector (9, 95) receives less light and thus the higher intensity due to the proximity to the illumination is compensated for.

**2.** Length or angle measuring device according to claim 1, characterised in that the light extending obliquely to the division planes and parallel to the grid markings (3, 10; 4, 11) is aligned by means of a cylinder lens (75) which is arranged in the focal point of a light source (65).

**3.** Length or angle measuring device according to claim 1, characterised in that the light source (6) is displaced in the focal plane of a condenser (7) in the direction of the markings to the optical axis in such a way that a parallel beam path results, which is inclined in the direction of the markings to the optical axis at an angle ($\alpha$).

**4.** Length or angle measuring device according to claim 1, characterised in that an illuminating unit comprising light source (6) and condenser (7) is located at an inclination to the optical axis in such a way that a parallel beam path results, which is inclined in the direction of the markings to the optical axis at an angle ($\alpha$).

**5.** Length of angle measuring device according to claim 1, characterised in that the device operates on the transmitted-light principle.

**Revendications**

**1.** Dispositif (1) de mesure de longueurs ou d'angles comportant plusieurs réseaux (3, 10; 4, 11) mobiles l'un par rapport à l'autre dans la direction de mesure, lesquels réseaux sont conformés en réseau de palpage (8) et en réseau de règle (2) et modulent la lumière arrivant d'une source lumineuse (6, 65), parallèlement à la direction des traits de réseaux (3, 10; 4, 11) et en biais par rapport aux plans de graduation des réseaux (2, 8), les modulations d'intensité de la lumière qui sont ainsi produites étant transformées par au moins un détecteur (9, 95) associé en des signaux électriques mutuellement déphasés et l'illumination du détecteur (9, 95), au nombre d'au moins un, dépendant de la distance entre les réseaux (2, 8),
caractérisé par le fait que
les longueurs des traits de réseau (3, 10; 4, 11) du réseau de palpage (8) et du réseau de règle (2) sont dimensionnées de manière telle que les zones voisines des traits de réseau (3, 10, 4, 11) dans la direction longitudinale agissent à la manière de limiteurs opaques, formant masques, pour le faisceau lumineux transmis, de telle sorte que pour la distance maximale admissible (Smax) entre les plans de graduation des réseaux (2, 8), l'illumination du détecteur (9, 95), au nombre d'au moins un, est maximale, tandis que pour la distance minimale (Smin) une partie du faisceau de lumière transmis est absorbée par les limiteurs formant masque, de sorte que le détecteur (9, 95) reçoit moins de lumière et qu'ainsi la plus forte intensité due à la plus grande proximité de la source de lumière est compensée.

2. Dispositif de mesure de longueurs ou d'angles selon la revendication 1, caractérisé par le fait que la lumière qui arrive en biais par rapport aux plans de graduation et parallèlement aux traits de réseau (3, 10; 4, 11) est redressée à l'aide d'une lentille cylindrique (75) qui est placée au foyer d'une source de lumière (65).

3. Dispositif de mesure de longueurs ou d'angles selon la revendication 1, caractérisé par le fait que la source de lumière (65), dans le plan focal d'un condenseur (7), est décalée en direction des traits par rapport à l'axe optique, de manière à obtenir un trajet de rayons parallèle qui est incliné d'un angle (α) dans la direction des traits par rapport à l'axe optique.

4. Dispositif de mesure de longueurs ou d'angles selon la revendication 1, caractérisé par le fait qu'une unité d'éclairage comprenant la source de lumière (6) et le condenseur (7) est disposée avec une inclinaison par rapport à l'axe optique de manière à obtenir un trajet de rayons parallèle qui est incliné d'un angle (α) dans la direction des traits par rapport à l'axe optique.

5. Dispositif de mesure de longueurs ou d'angles selon la revendication 1, caractérisé par le fait que le dispositif travaille selon le principe à lumière transmise.

FIG. 1

# FIG. 2

FIG. 3A

FIG. 3B

FIG. 3C

FIG. 4A

FIG. 4B

FIG. 4C

FIG. 5A

FIG. 5B

FIG. 5C